# EUROPEAN PATENT SPECIFICATION

(11) **EP 0 879 144 B1**
(45) Date of publication and mention of the grant of the patent: **08.01.2003**
(21) Application number: 96912740.6
(22) Date of filing: 15.04.1996
(51) Int. Cl.: B32B 31/06, B32B 31/08, B32B 31/12

(54) **STRUCTURE FORMING METHOD AND APPARATUS**
VERFAHREN UND VORRICHTUNG ZUM HERSTELLEN VON STRUKTUREN
PROCEDE ET APPAREIL DE FORMATION DE STRUCTURE

(30) Priority: 04.05.1995 WO PCT/US95/05450
(43) Date of publication of application: 25.11.1998
(73) Proprietor: Payne, LeRoy, Molt, MT 59057 (US)
(72) Inventor: Payne, LeRoy, Molt, MT 59057 (US)
(74) Representative: Milhench, Howard Leslie
(86) International application number: US9605132
(87) International publication number: WO96034743

(56) References cited:
- EP-A- 0 400 573
- WO-A-95/30541
- US-A- 3 511 729
- US-A- 4 872 784
- US-A- 4 955 760
- US-A- 5 049 006

## Description

This invention relates to a novel continuous structure forming method and apparatus.

The present invention provides a novel method and a novel apparatus which overcome the shortcomings of previous expedients. In addition, the method and apparatus provide features and advantages not found in earlier technology.

The method and apparatus of the present invention may be employed by individuals with only limited mechanical skills and experience. Structures can be produced by such individuals safely and efficiently without supervision utilizing the method and apparatus of the invention. The configuration and composition of the structure can be changed easily.

The method of the invention can be modified to form a variety of different structures with the apparatus of the invention. Variations in physical dimensions, composition and surface appearance, etc. can be achieved. Even with such changes, uniform high quality can be maintained without difficulty with the method and apparatus of the present invention.

A novel method of the present invention for forming a continuous structure includes the steps of preselecting a liquid reactive resin forming material, a particulate solid additive material and a porous blanket. The additive particles are mixed with the liquid resin forming material substantially continuously to encapsulate substantially all of the additive particles with the resin forming material to a preselected thickness.

A pool of the resulting mixture is formed on the porous blanket while it is moving over an elongated arcuate surface disposed in a preselected orientation. Part of the liquid resin forming material is migrated through the blanket substantially uniformly prior to gelling of the liquid resin forming material to form a continuous resin matrix within the structure.

A leading edge of the structure is grasped and advanced over a generally horizontally oriented supporting surface. The leading edge of the structure then is grasped along substantially its entire length and advanced away from the supporting surface along a preselected path. The structure is cut into a preselected length and the length placed into a final configuration while the length is flexible and adhesive.

The additive particles advantageously are mixed with the liquid resin forming material as it is passed continuously downwardly through an elongated mixing chamber. Preferably, the mixture is deposited on the blanket in a reciprocating motion from one side to the other.

The pool of the mixture advantageously is confined in contact with the blanket between a pair of adjustably spaced elongated arcuate surfaces with lower edges thereof positioned close together and substantially transverse to the direction of the advance. Preferably, the orientation of the arcuate surfaces and the horizontal supporting surface are monitored and adjusted to maintain the surfaces within preselected specifications.

A second blanket and/or a fibrous sheet may be included in the structure by positioning it so the pool of the mixture is between the two blankets. In this way, both blankets become integral components of the structure.

If desired, pressure may be applied to the structure prior to or after its placement in a final configuration. The pressure advantageously is applied simultaneously across an entire width of the structure. A preselected pattern may be formed on a surface of the structure while pressure is applied thereto, preferably along an extended length thereof.

Benefits and advantages of the novel method, apparatus and structure of the present invention will be apparent from the following description of the accompanying drawings in which:
Figure 1 is a view in perspective of one form of mobile continuous structure forming apparatus of the present invention;
Figure 2 is a side view of the structure forming apparatus of the invention shown in Figure 1;
Figure 3 is an enlarged fragmentary side view in section of the structure forming apparatus of the invention shown in Figures 1 and 2;
Figure 4 is a further enlarged fragmentary cross sectional view of the structure of the invention shown in Figure 1; and
Figure 5 is a schematic illustration of a structure forming apparatus of the invention moving into position over a ditch.

As shown in the drawings, one form of novel mobile continuous structure forming apparatus 11 of the present invention includes a supporting portion 12, a raw material supplying portion 13, a mixing portion 14, a matrix forming portion 15 and a control portion 16.

The supporting portion 12 of the structure forming apparatus of the invention includes a plurality of spaced upstanding frame members 20, 21, 22, 23. The frame members are adjustable in length. A plurality of generally horizontally disposed frame sections 25, 26, 27, 28 join adjacent upper ends of the upstanding frame members. For example as shown in the drawings, frame section 25 extends between an upper end 30 of frame member 20 and an upper end 31 of frame member 21.

Opposed frame sections 25, 27 are of adjustable length. This may be accomplished as shown by dividing a frame section into two and partially overlapping adjacent free ends within a housing 32, 33.

Spaced support sections 34, 35 extend between opposed frame sections 25, 27 and particularly between the respective housing 32, 33 of each frame section. Mixing portion 14 and matrix forming portion 15 extend downwardly adjustably from the support sections between the upstanding frame members 20 - 23. Other components (not shown) such as an operator's seat, an electrical generator, an air compressor, a hydraulic pump and the like also can be mounted on and/or suspended from the frame sections and support sections.

Pivotable carriage means 36 extend downwardly from lower ends 37 of the upstanding frame members. Advantageously, the carriage means include wheels 38 rotatable on axles 39. The carriages preferably include variable drive means 41 and include endless track members 42. Drive means 43 advantageously adjust the length of frame members 20 - 23 and adjustable frame sections 25, 27.

The mobile structure forming apparatus 11 advantageously includes four spaced upstanding frame members and four frame sections forming a quadrangular assembly as shown in the drawings. Preferably, the apparatus 11 includes jack means 44 extending downwardly between the carriage means 36.

The raw material supplying portion 13 of the apparatus 11 includes a plurality of reservoirs 46 operatively connected with the supporting portion 12. The reservoirs are connected independently with the mixing portion 14 through flexible conduit means 47. The raw material supplying portion advantageously also includes a gravity feed hopper 48 adjacent the mixing portion 14 and preferably heating means 49 along the length of the flexible conduit means.

The mixing portion 14 of the structure forming apparatus 11 of the invention includes a generally vertically oriented elongated mixing chamber 51 mounted on the supporting portion 12. A rotatable mixing element 52 is disposed within the mixing chamber as shown in Figure 3.

The mixing chamber 51 also preferably includes a solid particle delivery section 54 which is disposed at an obtuse angle to the mixing chamber. An open rotatable element 55 may be disposed within section 54 and extend into the mixing chamber. Advantageously, delivery section 54 is connected to the lower part of the mixing chamber 51.

The matrix forming portion 15 of the apparatus 11 includes mixture distributing means 56 adjacent an outlet 57 of the mixing chamber 51. The mixture delivery means 56 includes a pair of spaced elongated transversely disposed arcuate members 58, 59. The arcuate members are disposed with generally horizontal lower edges 61, 62 adjustably oriented closer together than upper edges 63, 64 thereof.

First elongated structure grasping means 65 is disposed below the lower edges 61, 62. Advantageously, as shown grasping means 65 includes a rotatable rod 66 with outwardly extending projections or pins 67. Rod 66 is spaced from the lower edges and aligned therewith.

Generally horizontally oriented structure support means 68 has one end 69 adjacent the rod 66. Second elongated structure grasping means 70 is disposed adjacent an opposite end 71 of the structure support means 68 remote from the first structure grasping means 65. Preferably, the second grasping means 70 as shown includes a pair of elongated hinged sections 72 aligned with rod 66.

Advantageously, the mixture distributing means 56 includes actuating means 73 reciprocating the outlet 57 of the mixing chamber 51 across the width of a blanket 60 passing thereunder. The mixture distributing means 56 preferably also includes positioning means 77, advantageously including sensing means 78 and automatic activating means 79. Preferably, cutting means 80 with a blade 81 is included, particularly cutting means extending parallel to and adjacent the opposite end 71 of the support means 68.

The mixture distributing means also advantageously includes advancing means 82 for moving structure 74 along a preselected path while the structure is flexible and adhesive. Advancing means 82 as shown in the drawings preferably may include a telescoping arm assembly 83 with a cable 84 to which second grasping means 70 is attached.

If desired, pressure applying means such as a roller, belt or opposed combinations thereof (not shown) may be included. The roller, belt, etc. may have a patterning surface. Pressure may be applied to the structure to conform it to an underlying surface, to compress the structure into a more dense mass and the like.

To form a structure employing the method and apparatus of the invention as shown in the drawings, a liquid reactive resin forming material is advanced from a reservoir 46 through a conduit 47 into mixing chamber 51. Simultaneously, other minor ingredients e.g. colors, catalysts, etc. from another reservoir advance through a conduit into the mixing chamber and are mixed with the resin forming material moving therethrough by rotatable mixing element 52.

As the resulting liquid mixture advances down the mixing chamber, a particulate solid additive material from hopper 48 advances through delivery section 54 into mixing chamber 51. The additive particles mix with the liquid resin forming material advancing therealong.

The additive particles are mixed with the liquid resin forming material substantially continuously, preferably in a proportion significantly greater than that of the resin forming material. During this mixing operation, substantially all of the additive particles are encapsulated with the liquid resin forming material to a preselected thickness.

The resulting mixture being delivered from outlet 57 of the mixing chamber 51 passes downwardly between a blanket 60 and a fibrous sheet 75 as they advance over arcuate members 58, 59. With the lower edges 61, 62 of the arcuate members close together in a preselected spacing, the mixture forms a pool 85 between the converging blanket and sheet moving downwardly past the arcuate members. Advantageously, the blanket and sheet are advanced at a rate sufficient to create movement of the additive particles within the pool to ensure complete encapsulation and also to maintain the particles in suspension so the mixture adhering to the blanket and sheet is homogeneous.

As the blanket 60 and fibrous sheet 75 advance past the closely spaced lower edges 61, 62 of the arcuate members, excess mixture is removed and a substantially uniform preselected thickness is retained between the blanket and the sheet. Thereafter, part of the liquid resin forming material is allowed to migrate through the blanket and sheet as the resulting structure is advanced by rotating rod 66 with the pins 67 extending therefrom engaging the blanket and/or sheet.

The path of the moving structure 74 is changed as it passes around rod 66 and onto horizontally oriented structure support 68. Migration of liquid resin forming material may continue during this step and succeeding steps as the leading edge of the structure reaches the opposite edge 71 of the structure support and is grasped by second grasping means 70. The second grasping means 70 shown as including a pair of hinged sections 72 operatively connected to telescoping arm assembly 83 through cable 84 draws the structure 74 along a preselected path.

When a desired preselected length of the structure 74 has reached the far edge 71 of the structure support 68, cutting means 80 is activated causing blade 81 to move across the structure from one side to the other. Then the cut length is carried by telescoping arm assembly 83 to an adjacent preselected location and positioned into a final configuration such as a ditch while the structure is flexible and adhesive. The structure conforms to the ditch surface and upon curing is tightly bonded thereto.

To form a preselected patterned surface on the resulting structure, it is passed into contact with a patterning roller, belt or a combination thereof.

To produce high quality structures of the invention, it is important that all of the steps be carefully coordinated by control portion 16. The control portion 16 of the structure forming apparatus 11 of the invention includes programmable memory means 86 and actuating means 87 responsive thereto in combination with coordinating means 88 to control the operation of pumps, valves and drives. Preferably, the coordinating means includes a process controller 89 that initiates changes in the flows of materials and speeds of drives to bring variations therein back to the rates specified in the programs present in the memory 86.

This coordination commonly is achieved through the transmission of information such as digital pulses from monitors and/or sensors at the control components to the process controller 89. The operating information is compared with the preselected programming parameters stored in the memory 86. If differences are detected, instructions from the controller change the operation of the components to restore the various operations to the preselected processing specifications.

During the above steps, the sensors 78 of positioning means 77 also are sensing the orientation of the matrix forming portion 15 and particularly lower edges 61, 62 of arcuate members 58, 59 and horizonal structure support 68. If a deviation is detected in the specifications stored in memory 86, activating means 79 automatically is energized to return the components of the matrix forming portion to their preselected orientation.

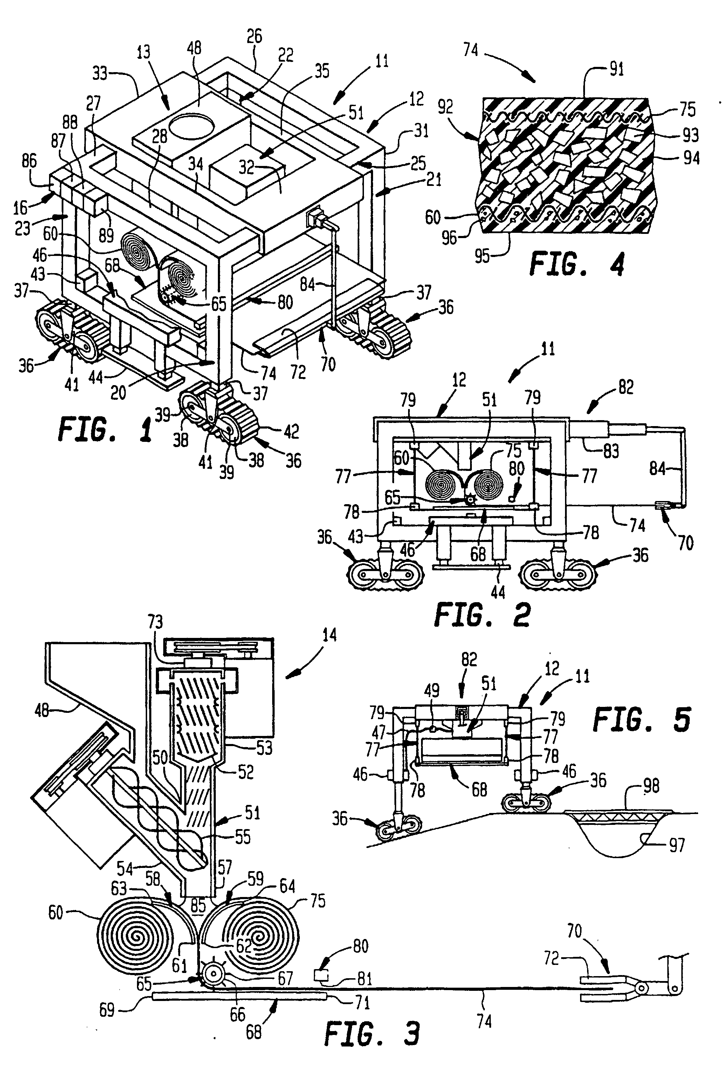

As shown in Figure 4, a cross section of a typical structure 74 of the invention includes a thin continuous resin rich upper layer 91 over a thin fibrous sheet 75 under which is a central layer 92 including a plurality of encapsulated solid particles 93 e.g. particles from grinding discarded tires, within a continuous resin matrix 94. The resin matrix extends throughout the structure from the thin resin rich upper layer 91 through fibrous sheet 75, through particle rich central layer 92 downwardly through blanket 60 and into a thinner resin rich lower layer 95 including a few very small solid particles 96 disposed primarily closely adjacent to the blanket.

Advantageously, inclusion of outer upper and/or lower plastic films (not shown) may facilitate the installation of novel structures of the invention under adverse weather conditions or below water or other liquids. Also, the flowing of resin through film openings can provide adhesion of the structure to a subsurface (not shown).

Normal maneuvering of the continuous structure forming apparatus of the invention to maintain it centered over a ditch ordinarily can be accomplished by increasing the speed of the carriages 36 on one side and/or decreasing the speed of the carriages on the other side.

Figure 5 illustrates the movement of the apparatus of the invention to another ditch. The apparatus 11 is prepared for movement by pivoting the carriages 36 ninety degrees from the normal operating orientation as shown in Figure 2 using jacks 44 to raise the carriages off the ground. The apparatus then is moved sideways up a grade and over a temporary ramp 98 until the apparatus straddles ditch 97. Thereafter, the jacks 44 again raise the carriages 36 so they can be pivoted back to an orientation parallel to the ditch for resuming the ditch lining.

The same steps can be employed to move the apparatus around obstacles such as bridges, trees, head gates, etc. To change the width of the apparatus, the two carriages on one side can be pivoted and driven away from or toward the center of the apparatus and thereby lengthen or shorten the adjustable frame sections 25 and 27.

The liquid reactive resin forming material employed to produce structures of the invention is selected to be capable of reaction to form the particular resin matrix desired in the final structure. Advantageously, the resin matrix is a thermosetting resin such as a polyurethane or polyester. Should a polyurethane be desired, one reservoir may contain an isocyanate and another reservoir may contain a polyol. More commonly, the reservoirs may contain different partially formed materials which upon mixing interact to form the desired polyurethane. Examples of such partially formed materials include so-called "A stage" resins and "B stage" resins.

Other resin forming systems may utilize a resin forming material in one reservoir and a catalyst in a second reservoir. Additional components can be premixed with one of the resin formers, e.g. fillers, reinforcements, colors and the like.

The particulate solid additive material is mixed with the liquid reactive resin forming material substantially continuously, preferably in a proportion significantly greater than that of the resin forming material. The additive particles may be any of a wide variety of inexpensive materials readily available at a particular job site. Natural mineral particulate materials such as sand and gravel normally are available or can be produced simply by crushing rock at the site.

Also, materials such as waste or recycled materials which can be shredded or ground into particles of suitable size can be utilized. Particularly useful are particles formed by shredding or grinding discarded tires. Since the particles are encapsulated with the resin forming material and not saturated therewith, many different waste materials may be employed.

Suitable porous blankets include woven, knit, non-woven structures, etc. The blankets e.g. fabrics, mats, etc. may be formed of continuous or discontinuous fibers, yarns, slit ribbons and similar natural and synthetic fibrous materials. Reinforcing members such as ropes, cables and the like that extend longitudinally and/or transversely of the blanket centerline may be included if desired.

The fibrous sheet includes products that utilize a major proportion of short fibers oriented predominately in a single plane. Preferably, the sheet is spot bonded at spaced points over its surface to provide strength along its major plane and general structural integrity.

The above description and the accompanying drawings show that the present invention provides a novel method, apparatus and structure which overcome the shortcomings of previous expedients and in addition, provide features and advantages not found in earlier technology.

The structure produced with the method and apparatus of the invention can include major proportions of recycled, waste or other materials which are readily available at a job site. These structures are of high quality and may exhibit properties not usually found in products formed with conventional ingredients.

The method of the invention may be conducted by individuals with only limited mechanical skills and experience to produce high quality structures safely and efficiently. The method can be modified to form a variety of different structures. Variations in configuration, composition, physical dimensions and surface appearance, etc. can be achieved easily. Even with such changes, uniformity and high quality can be maintained without difficulty.

It will be apparent that various modifications can be made in the particular method, apparatus and structure described in detail above and shown in the drawings within the scope of the present invention. The method steps, apparatus components and. types of materials employed can be changed to meet specific process and structural requirements. For example, the number and disposition of porous blankets and patterns can be different. These and other changes can be made in the method, apparatus and structure of the invention provided the functioning and operation thereof are not adversely affected. Therefore, the scope of the present invention is to be limited only by the following claims.

## Claims

1. A method of forming a continuous structure including the steps of preselecting a liquid reactive resin forming material, a particulate solid additive material and a porous blanket, mixing said additive particles with said liquid resin forming material substantially continuously, encapsulating substantially all of said additive particles with said liquid resin forming material to a preselected thickness, forming a pool of the resulting mixture on said blanket while it is moving over an elongated arcuate surface disposed in a preselected orientation, advancing said blanket while migrating part of said liquid resin forming material through said blanket substantially uniformly prior to gelling of said liquid resin forming material to form a continuous resin matrix within said structure, grasping a leading edge of said structure, advancing said structure over a generally horizontally oriented supporting surface, grasping said leading edge of said structure along substantially its entire length, advancing said leading edge away from said supporting surface along a preselected path, cutting said structure into a preselected length, placing said preselected structure length into a final configuration while said length is flexible and adhesive.

2. A method of forming a continuous structure according to claim 1 including the step of introducing a second blanket over a second elongated arcuate surface and confining said pool of said mixture between said two blankets.

3. A method of forming a continuous structure according to claim 2 wherein orientation of said arcuate surfaces and said supporting surface are monitored and adjusted to maintain said surfaces within preselected specifications.

4. A method of forming a continuous structure according to any preceding claim wherein said additive particles are mixed with said liquid resin forming material as said liquid resin forming material passes continuously downwardly through an elongated mixing chamber.

5. A method of forming a continuous structure according to any preceding claim including the step of applying pressure to said structure after it passes said arcuate surface.

6. Mobile continuous structure forming apparatus including a supporting portion, a raw material supplying portion, a mixing portion, a matrix forming portion and a control portion; said supporting portion including a plurality of spaced upstanding frame members of adjustable length, a plurality of generally horizontally disposed frame sections joining adjacent upper ends of said upstanding frame members, one pair of opposed frame sections being of adjustable length, support sections extending between said adjustable opposed pair of said frame sections, pivotable carriage means extending downwardly from lower ends of said upstanding frame members, said mixing portion extending from said support sections between said spaced upstanding frame members; said raw material supplying portion including a plurality of reservoirs operatively connected with said supporting portion, said reservoirs being connected independently with said mixing portion through flexible conduit means; said mixing portion including a generally vertically oriented elongated mixing chamber disposed between said support sections, a first rotatable mixing element disposed within said mixing chamber; said matrix forming portion including mixture distributing means extending adjustably downwardly from said support sections and being disposed adjacent an outlet of said mixing chamber, said mixture distributing means including a pair of spaced elongated transverse arcuate members disposed with horizontal lower edges adjustably oriented closer together than upper edges thereof, first elongated structure grasping means disposed below said lower edges of said arcuate members spaced therefrom and aligned therewith, generally horizontally oriented structure support means having one edge adjacent said first structure grasping means, second elongated structure grasping means disposed adjacent an opposite edge of said structure support means remote from said first structure grasping means; said control portion including programmable memory means, coordinating means, sensing means, actuating means, and circuitry transmitting signals from said sensing means to said coordinating means for comparison with said memory means and activation of said actuating means to form and place a continuous structure into a final configuration while it is flexible and adhesive.

7. Mobile continuous structure forming apparatus according to claim 6 including positioning means associated with said mixture distributing means.

8. Mobile continuous structure forming apparatus according to claim 6 or 7 including means for advancing said structure along a preselected path while said structure is flexible and adhesive.

9. Mobile continuous structure forming apparatus according to claim 8 wherein said means for advancing said structure along a preselected path includes an extendible arm assembly.

10. Mobile continuous structure forming apparatus according to any of claims 6 to 9 wherein said second elongated structure grasping means includes a pair of hinged sections.

## Patentansprüche

1. Verfahren zur Ausbildung einer kontinuierlichen Struktur mit folgenden Schritten:
Vorab-Auswählen eines flüssigen reaktiven Harz-bildenden Materials, eines festen Teilchen-Zusatzmaterials und einer porösen Decke,
im wesentlichen kontinuierliches Mischen der Zusatz-Teilchen mit dem flüssigen Harz-bildenden Material,
umschließen im wesentlichen aller Zusatz-Teilchen mit dem flüssigen Harz-bildenden Material bis zu einer vorgewählten Dicke,
Ausbilden eines Bads der sich ergebenden Mischung auf der Decke, während sich diese über eine längliche bogenförmige Fläche bewegt, die in eine vorgewählte Richtung angeordnet ist,
Voranbewegen der Decke, während ein Teil des flüssigen Harz-bildenden Materials im wesentlichen gleichförmig durch die Decke wandert, bevor das flüssige Harz-bildende Material geliert, um innerhalb der Struktur eine kontinuierliche HarzMatrix auszubilden,
Ergreifen einer voranlaufenden Kante der Struktur,
Voranbewegen der Struktur über eine im wesentlichen horizontal ausgerichtete Stützfläche,
Ergreifen der voranlaufenden Kante der Struktur über im wesentlichen ihre gesamte Länge,
Voranbewegen der voranlaufenden Kante weg von der Stützfläche entlang eines vorgewählten Weges,
Schneiden der Struktur in eine vorgewählte Länge, und
Ablegen des vorgewählten Längenstücks der Struktur in einer endgültigen Form während das Längenstück flexibel und klebrig ist.

2. Verfahren nach Anspruch 1 mit einem Schritt zum Einführen einer zweiten Decke über eine zweite längliche bogenförmige Fläche und Eingrenzen des Bads der Mischung zwischen den beiden Decken.

3. Verfahren nach Anspruch 2, wobei die Ausrichtung der bogenförmigen Flächen und der Stützfläche überwacht und eingestellt wird, um die Flächen innerhalb vorgewählter Vorgaben zu halten.

4. Verfahren nach einem der vorhergehenden Ansprüche, wobei die Zusatz-Teilchen mit dem flüssigen Harz-bildenden Material gemischt werden, während dieses kontinuierlich eine längliche Mischkammer abwärts durchquert.

5. Verfahren nach einem der vorhergehenden Ansprüche mit einem Schritt zum Anwenden von Druck auf die Struktur nachdem sie die bogenförmige Fläche passiert hat.

6. Mobile Vorrichtung zur Ausbildung einer kontinuierlichen Struktur, aufweisend
einen Stützbereich,
einen Rohmaterial-Zuführbereich,
einen Mischbereich,
einen Matrix-bildenden Bereich, und
einen Steuerbereich,
wobei der Stützbereich mehrere mit Abstand zueinander aufrecht angeordnete Rahmenelemente einstellbarer Länge, mehrere im wesentlichen horizontal angeordnete Rahmenabschnitte, die an angrenzende obere Enden der aufrechten Rahmenelement anschließen, wobei ein Paar gegenüberliegender Rahmenabschnitte eine einstellbare Länge aufweist, Stützabschnitte, die zwischen den einstellbaren gegenüberliegenden Rahmenabschnitten des Paars verlaufen, und schwenkbare Wageneinrichtungen, die von unteren Enden der aufrechten Rahmenelemente abwärts verlaufen, aufweist, wobei der Mischbereich von den Stützabschnitten ausgehend zwischen den mit Abstand voneinander angeordneten aufrechten Rahmenelementen verläuft,
wobei der Rohmaterial-Zuführbereich mehrere Reservoire aufweist, die mit dem Stützbereich zusammenwirkend verbunden sind und über flexible Leitungseinrichtungen unabhängig mit dem Mischbereich verbunden sind,
wobei der Mischbereich eine im wesentlichen vertikal ausgerichtete längliche Mischkammer aufweist, die zwischen den Stützabschnitten angeordnet ist und in der ein erstes drehbares Mischelement angeordnet ist,
wobei der Matrix-bildende Bereich eine Mischungs-Verteileinrichtung aufweist, die einstellbar von den Stützabschnitten abwärts verläuft und bei einem Auslass der Mischkammer angeordnet ist und ein Paar mit Abstand zueinander angeordneter länglicher Querbogenelemente beinhaltet, die mit horizontalen unteren Kanten einstellbar dichter zueinander ausgerichtet sind als mit ihren oberen Kanten, wobei mit Abstand unter ihren unteren Kanten auf sie ausgerichtet eine erste längliche Strukturgreifeinrichtung angeordnet ist, eine im wesentlichen horizontal ausgerichtete Strukturstützeinrichtung eine Kante bei der ersten Strukturgreifeinrichtung aufweist und bei einer gegenüberliegenden Kante der Strukturstützeinrichtung entfernt von der ersten Strukturgreifeinrichtung eine zweite längliche Strukturgreifeinrichtung angeordnet ist, und
wobei der Steuerbereich eine programmierbare Speichereinrichtung, eine Koordinierungseinrichtung, eine Erfassungseinrichtung, eine Betätigungseinrichtung und eine Schaltung zur Übermittlung von Signalen von der Erfassungseinrichtung zu der Koordinierungseinrichtung zum Vergleich mit der Speichereinrichtung und Aktivierung der Betätigungseinrichtung aufweist, um eine kontinuierliche Struktur auszubilden und in einer endgültigen Form abzulegen, während sie flexibel und klebrig ist.

7. Vorrichtung nach Anspruch 6 mit einer der Mischungsverteileinrichtung zugeordneten Positioniereinrichtung.

8. Vorrichtung nach Anspruch 6 oder 7 mit einer Einrichtung zum Vorwärtsbewegen der Struktur entlang einem vorgewählten Weg, während die Struktur flexibel und klebrig ist.

9. Vorrichtung nach Anspruch 8, wobei die Einrichtung zum Vorwärtsbewegen der Struktur entlang einem vorgewählten Weg eine ausziehbare Armanordnung aufweist.

10. Vorrichtung nach einem der Ansprüche 6 bis 9, wobei die zweite längliche Strukturgreifeinrichtung ein Paar gelenkiger Abschnitte aufweist.

## Revendications

1. Procédé de formation de structure continue, comportant les étapes qui consistent à sélectionner un matériau constituant une résine liquide réactive, un matériau adjuvant solide en particules et une nappe poreuse, à mélanger en mode pratiquement continu lesdites particules d'adjuvant avec ledit matériau constituant une résine liquide, à enrober pratiquement la totalité desdites particules d'adjuvant avec ledit matériau constituant une résine liquide en une épaisseur présélectionnée, à former un volume du mélange résultant sur ladite nappe pendant qu'elle se déplace sur une surface courbe allongée disposée dans une orientation présélectionnée, à faire avancer ladite nappe tout en laissant une partie dudit matériau constituant une résine liquide migrer de manière pratiquement uniforme à travers ladite nappe, avant la gélification dudit matériau constituant une résine liquide, pour qu'il se forme une matrice résineuse continue au sein de ladite structure, à saisir un bord avant de ladite structure, à faire avancer ladite structure sur une surface de support orientée de façon globalement horizontale, à saisir ledit bord avant de ladite structure sur pratiquement toute sa longueur, à faire avancer ledit bord avant le long d'un parcours présélectionné en l'éloignant de ladite surface de support, à couper un morceau de longueur présélectionnée de ladite structure, et à placer ledit morceau de structure de longueur présélectionnée dans sa configuration finale, pendant qu'il est encore souple et collant.

2. Procédé de formation de structure continue, conforme à la revendication 1, qui comporte des étapes consistant à introduire une deuxième nappe sur une deuxième surface courbe allongée et à confiner ledit volume dudit mélange entre les deux nappes susdites.

3. Procédé de formation de structure continue, conforme à la revendication 2, dans lequel les orientations desdites surfaces courbes et de ladite surface de support sont ajustées et surveillées de manière à ce que ces surfaces soient maintenues dans les limites de spécifications présélectionnées.

4. Procédé de formation de structure continue, conforme à l'une des revendications précédentes, dans lequel lesdites particules d'adjuvant sont mélangées avec ledit matériau constituant une résine liquide pendant que ledit matériau constituant une résine liquide descend en continu dans une chambre de mélange de forme allongée.

5. Procédé de formation de structure continue, conforme à l'une des revendications précédentes, qui comporte une étape consistant à exercer une pression sur ladite structure après son passage sur ladite surface courbe.

6. Appareil mobile de formation de structure continue, comportant une partie de support, une partie d'alimentation en matières premières, une partie de mélangeage, une partie de formation de matrice et une partie de commande ; ladite partie de support comportant plusieurs éléments de cadre verticaux espacés, de longueur ajustable, plusieurs sections de cadre globalement horizontales qui joignent les extrémités supérieures adjacentes desdits éléments de cadre verticaux, une paire de sections de cadre opposées étant de longueur ajustable, des sections de support s'étendant entre lesdites sections de cadre opposées de longueur ajustable, et des moyens de transport pivotants s'étendant vers le bas à partir des extrémités inférieures desdits éléments de cadre verticaux ; ladite partie de mélangeage s'étendant à partir desdites sections de support entre lesdits éléments de cadre verticaux espacés ; ladite partie d'alimentation en matières premières comportant plusieurs réservoirs opérationnellement reliés à ladite partie de support, lesdits réservoirs étant reliés indépendamment à ladite partie de mélangeage par l'intermédiaire de conduits flexibles ; ladite partie de mélangeage comportant une chambre de mélangeage allongée, globalement verticale, disposée entre lesdites sections de support, un premier élément tournant de mélangeage étant placé à l'intérieur de ladite chambre de mélangeage ; ladite partie de formation de matrice comportant des moyens de distribution de mélange s'étendant vers le bas, de manière ajustable, à partir desdites sections de support, et disposés au voisinage d'une sortie de ladite chambre de mélangeage, lesdits moyens de distribution de mélange comportant une paire d'éléments arqués transversaux allongés espacés, disposés de telle manière que leurs bords inférieurs horizontaux sont orientés, de manière ajustable, pour être plus rapprochés l'un de l'autre que leurs bords supérieurs, un premier moyen allongé de préhension de structure, disposé au-dessous desdits bords inférieurs desdits éléments arqués, à l'écart de ceux-ci et en alignement avec eux, un moyen de support de structure orienté de manière globalement horizontale, dont l'un des bords est au voisinage dudit premier moyen de préhension de structure, un deuxième moyen allongé de préhension de structure, disposé au voisinage d'un bord opposé dudit moyen de support de structure et éloigné dudit premier moyen de préhension de structure ; ladite partie de commande comportant des mémoires programmables, des moyens de coordination, des capteurs, des moyens de manoeuvre et des circuits transmettant des signaux depuis lesdits capteurs jusqu'auxdits moyens de coordination, pour comparaison avec lesdites mémoires et activation desdits moyens de manoeuvre pour former une structure continue et la placer dans une configuration finale pendant qu'elle est encore souple et collante.

7. Appareil mobile de formation de structure continue, conforme à la revendication 6, comportant des moyens de positionnement associés auxdits moyens de distribution de mélange.

8. Appareil mobile de formation de structure continue, conforme à la revendication 6 ou 7, comportant un moyen permettant de faire avancer ladite structure le long d'un parcours présélectionné pendant que ladite structure est encore souple et collante.

9. Appareil mobile de formation de structure continue, conforme à la revendication 8, dans lequel ledit moyen permettant de faire avancer ladite structure le long d'un parcours présélectionné comporte un ensemble à bras extensible.

10. Appareil mobile de formation de structure continue, conforme à l'une des revendications 6 à 9, dans lequel ledit deuxième moyen allongé de préhension de structure comporte une paire d'éléments à charnière.
